# EUROPEAN PATENT SPECIFICATION

(11) **EP 2 353 932 B1**
(45) Date of publication and mention of the grant of the patent: **19.06.2019**
(21) Application number: 11152260.3
(22) Date of filing: 26.01.2011
(51) Int. Cl.: B60P 1/38

(54) **Transport vehicle having a movable loading platform**
Transportfahrzeug mit beweglicher Ladeplattform
Véhicule de transport doté d'une plateforme de chargement mobile

(30) Priority: 27.01.2010 NL 1037657
(43) Date of publication of application: 10.08.2011
(73) Proprietor: Michels, Noël Petrus Wilhelmus Franciscus, 5813BB Ijsselsteijn (NL)
(72) Inventor: Michels, Noël Petrus Wilhelmus Franciscus, 5813BB Ijsselsteijn (NL)
(74) Representative: Algemeen Octrooi- en Merkenbureau B.V.

(56) References cited:
- AT-B- 314 990
- DE-U1- 29 905 790
- FR-A- 1 090 159
- FR-A1- 2 719 528
- FR-A1- 2 725 168
- US-A- 4 642 018

## Description

The present invention relates to a transport vehicle comprising a cargo area having a front side, a rear side provided with a loading and unloading opening, a loading platform for supporting cargo and comprising loading platform parts extending across at least part of the width, which are separated from each other at least in the longitudinal direction, and a conveyor for moving loading platform parts in horizontal and vertical direction, perpendicularly to the longitudinal axis of the vehicle, within the cargo area.

German Gebrauchsmuster G 92 14 296.6 describes a truck comprising several floor segments disposed one behind the other, which can be moved forward and backward between two end positions in the cargo area by means of a conveyor chain. In one first extreme position, all floor segments are disposed behind each other in horizontal direction, thus forming a loading platform. From said first extreme position, the loading platform can be moved rearwards, with the rear floor segments successively being tilted up along the rear wall and then being moved forward in upside-down position along the upper wall of the cargo area until the "frontmost" floor segment is located at the rear of the cargo area. The floor segments are thus presented at the rear of the cargo area in succession for unloading. The floor segments are presented in reverse order of succession for being loaded.

A drawback of the device that is known from G 92 14 296.6 is the fact that loading and unloading of the floor segments can only take place in a specific order. Accordingly it is an object of the present invention to provide a transport vehicle as described in the introduction which makes it possible to realise a more flexible order of loading and unloading. This object is accomplished with the present invention in that the transport vehicle is designed to maintain the loading platform parts at least substantially in a horizontal position in the cargo area while the loading platform parts are being moved within the cargo area, wherein the conveyer comprises two endless chain conveyors which are each driven by a driven gear sprocket and whose path is further determined by non-driven gear sprockets. This makes it possible to move a loading platform part carrying cargo upward at the rear of the cargo area so as to make space for loading or unloading a next loading platform part. In other words, an operator of driving means for the endless conveyor can continuously move a desired loading platform part to a loading and unloading opening at the back of the cargo area without concerning himself with cargo that may or may not be present on other loading platform parts. This is advantageous in particular in situations in which loading as well as unloading of part of the cargo take place at one address, as is the case with return systems.

US 4,042,018 A discloses an automatic device for loading the total volume of a transport vehicle. The device comprises movable elements for forming at least one floor movable along the length of the vehicle, Intermediate rails for supporting the floor, fixed rails for storing the floor elements, chains for lifting and lowering the floor elements, and a chain for shifting them and transferring them between the rails and the chains and vice versa. The movable elements of the floor are trolleys.

DE 299 05790 U1 discloses a device In a vehicle for loading and unloading of a transport vehicle for a number of essentially the same containers. The device consists of at least two conveyor paths positioned above each other and carriers comprising horizontal conveyors and of a front and a rear vertical conveyor device for, preferably forwardly and backwardly circulating conveying of the containers along at least one lower and at least one storage surface of the transport vehicle and for issuing and taking up of containers by means of one of the conveyor devices. The conveyor paths of the horizontal conveyor devices comprise slides supported by the horizontal conveyor devices for carrying at least one container. Carriers are connected to the slides. The containers comprise carrier receivers that correspond with the carriers of the slides. The horizontal conveyor devices or the vertical conveyor devices or the horizontal conveyor devices together with the vertical conveyor devices comprise means to releasably suspend the carrier receivers In the carriers or to provide another carrying connection for the containers.

The object aimed at by the present invention is thus accomplished.

US 4,642,018 A discloses an automatic device for loading the total volume of a transport vehicle. The device comprises movable elements for forming at least one floor moveable along the length of the vehicle, intermediate rails for supporting the floor, fixed rails for storing the floor elements, chains for lifting and lowering the floor elements, and a chain for shifting them and transferring them between the rails and the chains and vice versa. The movable elements of the floors are trolleys.

DE 299 05790 U1 discloses a device in a vehicle for loading and unloading of a transport vehicle for a number of essentially the same containers. The device consists of at least two conveyor paths positioned above each other and carriers comprising horizontal conveyers and a front and a rear vertical conveyor device for, preferably forwardly and backwardly circulating conveying of the containers along at least one lower and at least one storage surface of the transport vehicle and for issuing and taking up of containers by means of one of the conveyor devices. The conveyor paths of the horizontal conveyor devices comprise slides supported by the horizontal conveyor devices for carrying at least one container. Carriers are connected to the slides. The containers comprise carrier receivers that correspond with the carriers of the slides. The horizontal conveyer devices comprise means to releasably suspend the carrier receivers in the carriers or to provide another carrying connection for the containers.

In a preferred embodiment of the present invention, the loading platform parts are suspended from the conveyor. If the loading platform parts are suspended from the conveyor at one suspension point on either side, seen in the transverse direction of the cargo area, a horizontal position of the loading platform parts can be realised in a simple manner.

In an alternative embodiment of the present invention, the loading platform parts are supported by a conveyor. The loading platform parts are in that case horizontally supported on a conveyor during transport in horizontal direction. Upon movement in vertical direction, the conveyor itself may also be partially moved in vertical direction. It is also possible, however, for a conveyor, at least an upper conveyor, not to extend entirely to the front and the rear of the cargo area, so that space is created for vertically moving loading platform parts at the front and the rear of the cargo area, using separate lifting and lowering means.

Preferably, guide means are provided for guiding the loading platform parts in a path of movement defined by a guide. The guide means may moreover provide additional support for supporting the loading platform parts, in particular when cargo is present thereon.

The guide means may comprise an endless guide. An endless guide can for example be used in combination with an endless conveyor, such as a chain conveyor, from which the loading platform parts may be suspended. The endless guide may define a substantially rectangular or an oval guide path. The guide means may also comprise divided guide means, such as two horizontal guideways for horizontal movement and separate vertical lifting and lowering means for moving the loading platform parts between the two horizontal guide paths.

Preferably the second horizontal guide path of a track along which the guide means move extends above the first horizontal guide path in that case. In a first preferred embodiment, the first guide path extends near the bottom side of the cargo area, and the second horizontal guide path extends approximately halfway the height of the cargo area, for example in an embodiment in which the loading platform parts are supported by a conveyor. Alternatively, the first horizontal guide path extends approximately halfway the height of the cargo area, and the second horizontal guide path extends near the upper side of the cargo area, for example in an embodiment in which suspended loading platform parts are used. In both cases the cargo area is divided into two substantially equal parts, and the loading platform parts can be moved on either side of the second horizontal guide part and the first horizontal guide path, respectively, in the cargo area.

A simple construction is provided when the conveyor forms part of the guide means. Thus the loading platform parts may on either side be connected to opposite links of the chain conveyor, in which case the chain conveyors function both as transport means and as guide means.

The loading platform parts preferably extend across substantially the entire width of the cargo area. Thus an efficient utilization of the cargo area is achieved. According to an alternative possibility, however, the loading platform parts only extend across part of the width of the cargo area, in which case there is a possibility to provide two or more loading platforms beside each other, which loading platforms each take part of the width of the cargo area. Thus, the required load-carrying capacity of each loading platform part is reduced, making it possible to use lighter driving mechanisms for the conveyors.

In order to provide sufficient loading space on a loading platform part, the loading platform parts preferably extend over a distance of more than 50 cm in the longitudinal direction of the cargo area.

In a preferred embodiment of the present invention, the loading platform parts all have at least substantially the same length. If the expected cargo varies as regards its dimensions, it is also possible to vary the length of the loading platform parts. The term "length" as used in this connection is understood to mean the distance over which the loading platform parts extend in the longitudinal direction of the cargo box.

In order to prevent a cargo extending from one loading platform part to a position on or above an adjacent loading platform part, it is preferable if the loading platform parts comprise an upright wall on the side that is directed towards the front of the cargo area. Said upright wall can be used as a bumper during loading, so that the cargo is placed on a loading platform part as far to the front of the vehicle as possible. At the rear side, loading personnel will have a view of the loading platform parts, making it possible to prevent the cargo from extending (too far) rearwards from the loading platform part at the rear side.

In a preferred embodiment of the present invention, loading platform parts disposed one behind the other are spaced some distance apart in the longitudinal direction. Said distance may be at least half a centimetre. In a preferred embodiment of the present invention, said distance is at least 5 cm.

Preferably, locking means are provided for locking the loading platform parts in position. This makes it possible, for example, to prevent suspended loading platform parts or loading platform parts present on a roller conveyor from moving in the longitudinal direction of the cargo area during transport.

In a preferred embodiment of the present invention, the transport vehicle is designed to make it possible to place the loading platform parts in the cargo area or, quite the reverse, remove them from the cargo area, with relatively little effort. In this way a flexible transport vehicle is provided which can be converted from a transport vehicle with movable loading platform parts according to the invention into a transport vehicle having one at least substantially fixed loading platform, for example, in a relatively simple manner. Said fixed loading platform may be made up of a fixed bottom of the cargo area, but it may also be made up of some of the loading platform parts that remained in the cargo area after the removal of some of the other loading platform parts. Another advantage of the aforesaid relatively easy placement or removal of loading platform parts is that the transport vehicle can be easily adapted to accommodate transport cargoes of varying dimensions by replacing loading platform parts. If desired, the conveyor and the guide means can remain in the vehicle after the loading platform parts have been removed from the cargo area.

According to a second aspect thereof, the present invention relates to a cargo area arranged for use in a transport vehicle according to the first aspect of the invention.

The present invention will be explained in more detail hereinafter with reference to the appended drawings, which show a few embodiments of a transport vehicle according to the present invention, and in which:
Figure 1 is a perspective, partially cutaway view of a box truck according to the present invention;
Figure 2 is a perspective, partially cutaway view of an embodiment of a box truck;
Figure 3 is a perspective view of loading platform parts according to the present invention suspended from a conveyor;
Figure 4 is a perspective view of a locking arrangement for the loading platform parts;
Figure 5 is a perspective view of an alternative locking arrangement for the loading platform parts;
Figure 6 is a perspective view of a skeleton of a cargo box of a vehicle shown in figure 1;
Figure 7 is a perspective view of a skeleton of a cargo box of a vehicle shown in figure 2.

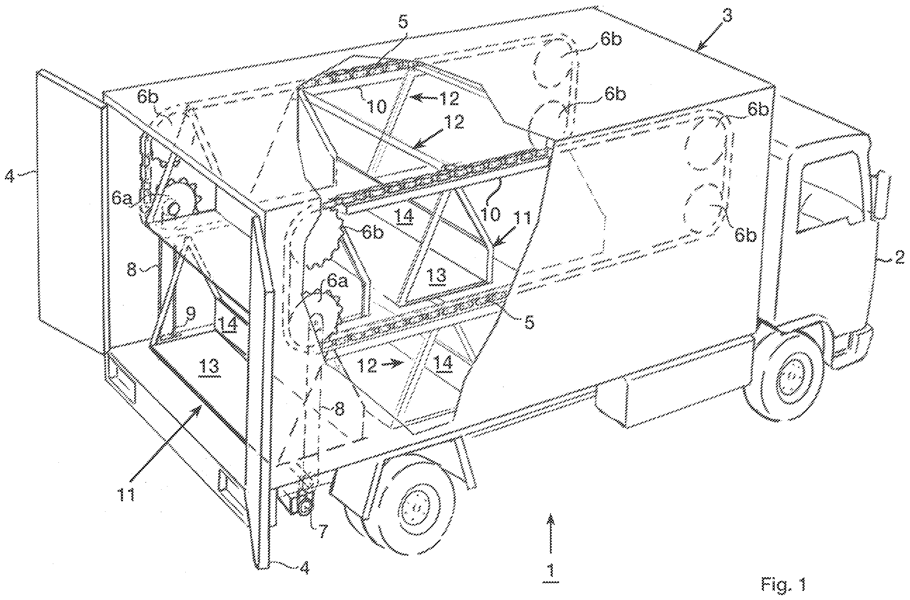

Figure 1 shows a box truck 1 comprising a cabin 2 and a cargo box 3 provided with a loading and unloading opening at the rear side, which opening can be closed by means of doors 4. In the box truck 1 are two endless chain conveyors 5, which are each driven by a driven gear sprocket 6a and whose path is further determined by non-driven gear sprockets 6b. The gear sprockets 6a are driven by means of a motor (not shown), which in turn drives a drive shaft 7, whose rotation is transmitted to the gear sprockets 6a via drive belts 8 that extend through slots 9. Furthermore disposed in the cargo area are guides 10. Loading platform parts 11 having a frame 12 and a bottom 13 with a front wall 14 are suspended from the chain conveyor 5.

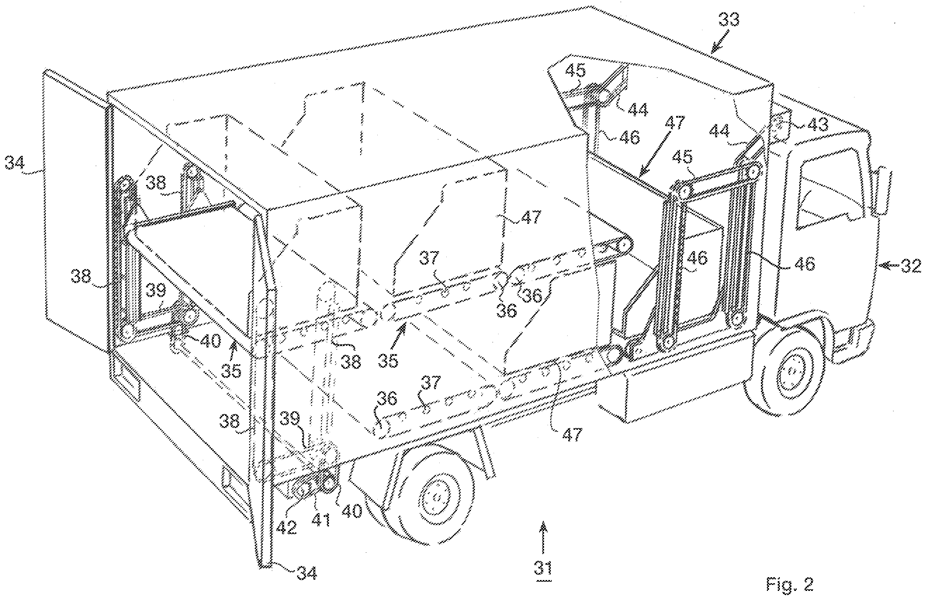

Figure 2 shows a box truck 31 not part of the current invention comprising a cabin 32 and a cargo box 33 provided with a loading and unloading opening at the rear side, which opening can be closed by means of doors 34. In this embodiment, the loading platform parts in the form of cargo boxes 47 are supported on endless belts 35, which are passed over rollers 36 and which are provided with support rollers 37. Disposed at the front side and the rear side of the cargo box 33 are two lifting mechanisms for moving the respective front and rear endless belts 35 up and down, respectively. The rear endless belt 35 can be moved in a conventional manner via belts 38, 39, 40 and 41. Disposed at the front side of the cargo box 33 is a drive shaft 43 for moving the front endless belt 35 up and down via belts 44, 45 and 46. The cargo boxes 47 are open at the rear side so as to make it possible to load and unload the boxes via the loading and unloading opening of the box truck 31.

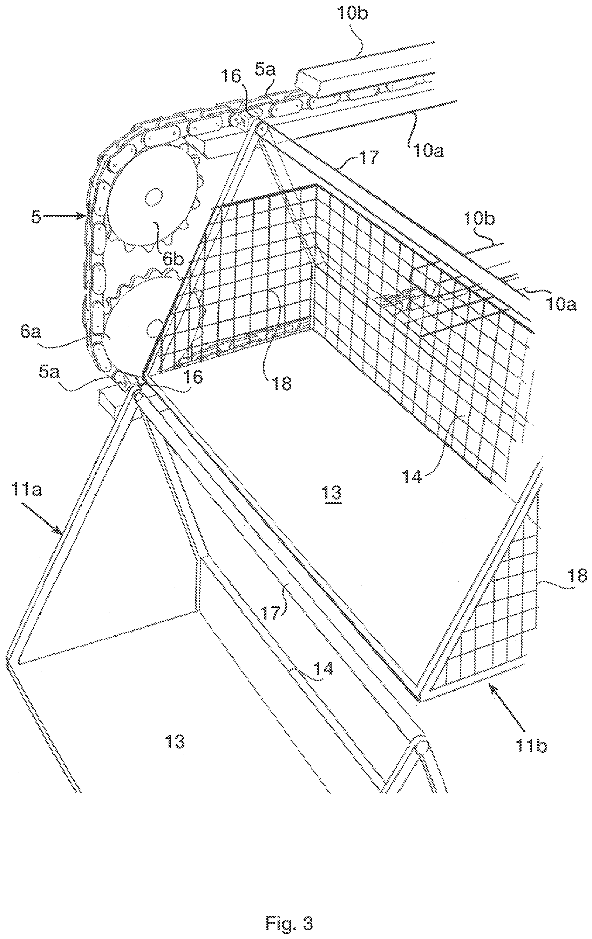

Figure 3 shows a detail view of the driving and guiding arrangement of two different loading platform parts 11a and 11b, respectively, for a system as described with reference to figure 1. Like parts are indicated by the same numerals as in figure 1. Links of the chain 5 are passed over gear sprockets 6a, 6b. A sheet steel element 16 folded to a U-shape is welded to the links 5a, to which element 16 a bearing girder 17 is attached by means of a mortise and tenon joint. The loading platform parts 11a, 11b have a bottom 13 and a front wall 14. In addition, a mesh construction 18 is attached to the loading platform part 11b.

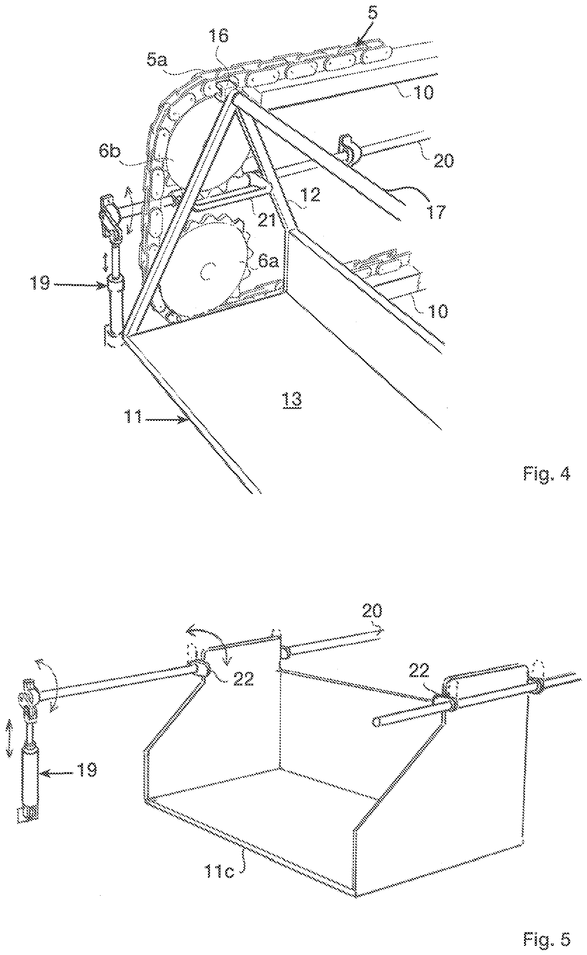

Figure 4 shows a locking arrangement for a loading platform part 11; a cylinder 19 causes a rod 20 provided with a locking element 21 to rotate.

Figure 5 shows an alternative embodiment of a locking arrangement, in which the loading platform part 11c can be clamped between locking lips 22.

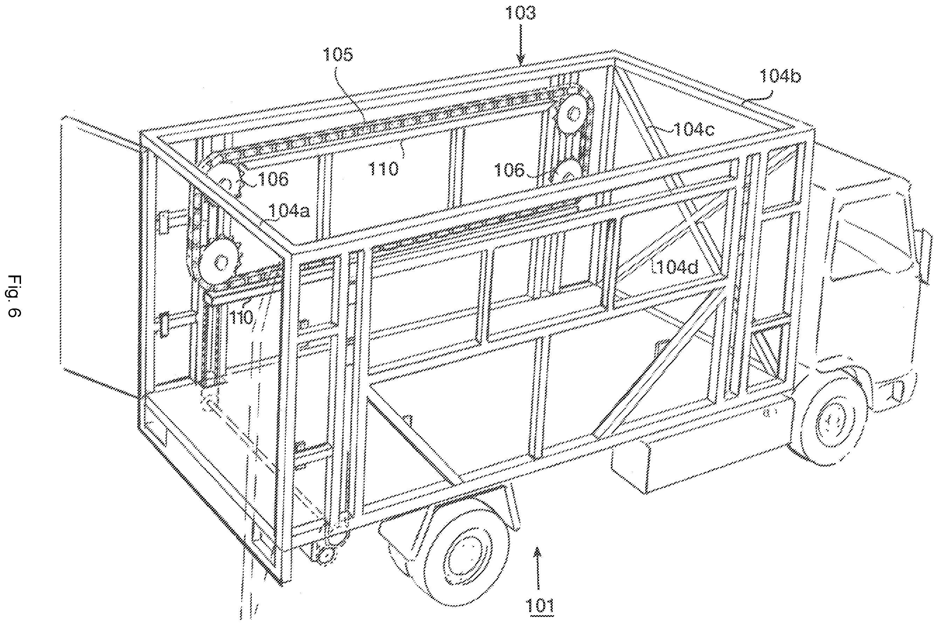

Figure 6 is a schematic view of a box truck 101 whose cargo box 103 is specially designed to accommodate a construction as described with reference to the box truck 1 in figure 1. In this figure the upper wall and the side walls of the cargo box 103 have been left out for the sake of clarity. The cargo box 103 comprises a skeleton 104 provided with uprights and girders, to which gear sprockets 106 and guides 110 can be connected, as shown for the distal side wall of the cargo box 103. Many variants of skeletons for such a cargo box are conceivable. What is important is that the transverse beams that extend across the width of the cargo box 103, indicated as transverse beams 104a, 104b, and the diagonal beams 104c, 104d are located out of the reach of the loading platform parts that are, or at least are to be, suspended from the chain conveyor 105. The diagonal beams 104c, 104d extend at the front side of the cargo box, because the rear side of the cargo box 103 must remain clear for loading and unloading cargo from the cargo box 103.

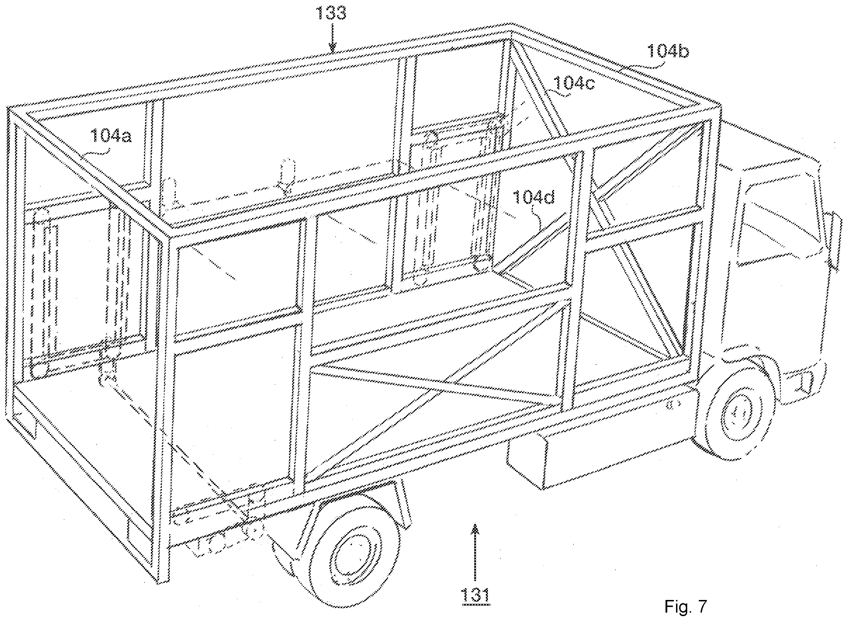

Figure 7 shows a box truck 131 for use with a construction as described with reference to figure 2. In this figure, too, the upper wall and the side walls of the cargo box 133 have been left out. Since the interaction of forces in a construction as shown in figure 1, in which loading platform parts are suspended in the cargo box, is different from the interaction of forces in a construction as shown in figure 2, in which the loading platform parts are supported within the cargo box 133, the frame construction is different here. Also in this case the transverse beams 104a, 104b and the diagonal beams 104c, 104d are located out of the reach of the loading platform parts (not shown) that move within the cargo box 133.

With reference now to figure 1, there is shown a box truck 1 comprising a cabin 2 and a cargo box 3. Present at the rear side of the cargo box 3 is a loading and unloading opening, which can be closed by means of doors 4. When cargo is to be unloaded from the box truck 1, and return cargo must possibly be loaded, an operator opens the cargo doors 4 and operates a conventional motor (not shown), which is mounted under the cargo box 3, for driving the drive shaft 7. Via the drive shaft 7 and driving belts 8, driven gear sprockets 6a are engaged for driving the chain conveyor 5. The chain conveyor 5 is led into a substantially rectangular path by gear sprockets 6a, 6b. Sheet steel elements 16 bent to a U-shape are welded to the links 5a (see figure 3). A through hole is provided in the side of the sheet steel elements 16 that is directed towards the interior of the cargo box 3, through which through hole externally threaded pins projecting from the bearing girder 17 can be passed. The bearing girders 17 are attached to the sheet steel elements 16, and thus to the two chain conveyors 5, by means of nuts. Using the above-discussed drive gear, the operator moves the loading platform parts 11 until the desired loading platform part 11 is located at the back of and at the bottom of the cargo box 3. Cargo present on the bottom 13 of the loading platform part 11 in question can then be unloaded, or a new cargo can be placed on the bottom 13 of the loading platform part 11. The front wall 14 of the loading platform part 11 prevents cargo from being positioned (too) far forward on the bottom 13, which might interfere with a correct movement of the loading platform parts 11 through the cargo box 3. If desired, a loading platform part 11 may be provided with additional means, such as a mesh construction 18, for the loading platform part 11b (figure 3), which must prevent cargo from undesirably falling from the bottom 13, which might interfere with the movement of the loading platform parts within the cargo box 3.

In figure 4 a detail of the construction present in the cargo box 3 is shown, which construction is provided with a locking mechanism 20, 21. Preferably, the suspended loading platform parts 11 are locked in position before the box truck 1 can drive off, because otherwise there would be a risk of the loading platform parts 11 starting to swing within the cargo box 3, which might influence the road behaviour of the box truck 1 and cause cargo to fall off the loading platform part 11. To that end a cylinder 19 is actuated before the box truck drives off, by means of which cylinder a rod 20 can be pivoted between a position in which a locking element 21 fixes the frame 12 in position in the cargo box (as shown in figure 4) and a position (not shown) in which a locking element 21 has been pivoted downwards, thereby releasing the frame 12 and the loading platform part 11.

In figure 5 a different type of locking arrangement is provided, in which use is likewise made of a cylinder 19 that causes a rod 22 rotate, but in which lips 22 can be pivoted up from a locking position (as shown in figure 5) so as to release the loading platform part 11c. Many locking arrangements are possible. The type of locking arrangement that is used will depend on the type of loading platform part that is used in a box truck.

Referring now to figure 2, there is shown a box truck 31 comprising a cargo box 33 fitted with endless belts 35. An endless belt 35 is provided at the front and at the rear of the cargo box 33, which belt can be moved up and down in the cargo box 33 by means of a lifting mechanism yet to be discussed hereinafter. A fixed lower loading platform and a fixed upper loading platform extend between the front and the rear endless belt 35, which loading platforms are both made up of endless belts 35 which can rotate but which are positioned at a fixed position in the cargo box 33. The rear endless belt 35 is suspended from a conventional type of lifting mechanism, said endless belt 35 being carried by four belts 38, which can be operated by a drive shaft 42 via belts 39, 40 and 41. A comparable lifting mechanism comprising a drive shaft 43 and belts 44, 45, 46 is provided at the front of the cargo box 33. The front and the rear endless belt 35 can be moved up and down by operating the front drive shaft 42 and the rear drive shaft 43 either individually or simultaneously. In their end positions, the front and the rear endless belt can be driven, as can the intermediate endless belts, for moving cargo platform parts 47 present on the endless belts 35 forward or rearward. In this way an operator can move the desired loading platform part 47 to a position at the rear of the cargo box 33 for loading or unloading cargo onto and from the loading platform part in question. The exact operation of the endless belts and the lifting mechanisms will not be discussed in detail herein. Various conventional alternatives for such a construction will be known to those skilled in the art of belt conveyors and lifting mechanisms.

In the appended figures and the above description a few embodiments of a transport vehicle according to the present invention are shown and described. It will be understood, however, that many variants, which may or may not be obvious to the skilled person, are conceivable within the scope of the present invention, which is determined by the appended claims. In fact, any type of paternoster, providing it is adapted to the desired dimensions of a vehicle, can be used in a cargo area of a transport vehicle. Thus, a box truck is described in all the embodiments, but the present invention can just as well be used with a canvas covered truck, with a trailer, or even with other types of transport vehicles, such as railroad cars or other forms of container transport. The invention brings the possibility of part-load transportation by rail or other container transport nearer.
invention, which is determined by the appended claims. In fact, any type of paternoster, providing it is adapted to the desired dimensions of a vehicle, can be used in a cargo area of a transport vehicle. Thus, a box truck is described in all the embodiments, but the present invention can just as well be used with a canvas covered truck, with a trailer, or even with other types of transport vehicles, such as railroad cars or other forms of container transport. The invention brings the possibility of part-load transportation by rail or other container transport nearer.

## Claims

1. A transport vehicle (1, 101) comprising a cargo area (3, 103) having a front side, a rear side provided with a loading and unloading opening, a loading platform (11, 11a, 11b) for supporting cargo and comprising loading platform parts (11, 11a, 11b) extending across at least part of the width, which are separated from each other at least in the longitudinal direction, and a conveyor (5, 105) for moving loading platform parts in horizontal and vertical direction, perpendicularly to the longitudinal axis of the vehicle, within the cargo area, the transport vehicle being designed to maintain the loading platform parts at least substantially in a horizontal position in the cargo area while the loading platform parts are being moved within the cargo area, **characterised in that** the conveyor comprises two endless chain conveyors (5, 105) which are each driven by a driven gear sprocket (6a, 106) and whose path is further determined by non-driven gear sprockets (6b, 106).

2. A transport vehicle according to claim 1, **characterised in that** the loading platform parts are suspended from the conveyor.

3. A transport vehicle according to claim 1, **characterised in that** the loading platform parts are supported by the conveyor.

4. A transport vehicle according to claim 1, 2 or 3, **characterised in that** guide means are provided for guiding the loading platform parts in a path of movement defined by a guide.

5. A transport vehicle according to claim 4, **characterised in that** the guide means comprise an endless guide.

6. A transport vehicle according to claim 4 or 5, **characterised in that** the guide means comprise two horizontal guide paths, a first of which extends approximately halfway the height of the cargo area.

7. A transport vehicle according to claim 6, **characterised in that** the second horizontal guide path of a track along which the guide means move extends above the first horizontal guide path.

8. A transport vehicle according to one or more of claims 4-7, **characterised in that** the conveyor forms part of the guide means.

9. A transport vehicle according to one or more of the preceding claims, **characterised in that** the loading platform parts extend across substantially the entire width of the cargo area.

10. A transport vehicle according to one or more of the preceding claims, **characterised in that** the loading platform parts extend over a distance of more than 50 cm in the longitudinal direction of the cargo area.

11. A transport vehicle according to one or more of the preceding claims, **characterised in that** the loading platform parts comprise an upright wall on the side that is directed towards the front of the cargo area.

12. A transport vehicle according to one or more of the preceding claims, **characterised in that** loading platform parts disposed one behind the other are spaced some distance apart in the longitudinal direction.

13. A transport vehicle according to one or more of the preceding claims, **characterised in that** locking means are provided for locking the loading platform parts in position.

14. A transport vehicle according to one or more of the preceding claims, **characterised in that** the transport vehicle is designed to make it possible to place the loading platform parts in the cargo area or, quite the reverse, remove them from the cargo area, with relatively little effort.

15. A cargo area (3, 103) arranged for use in a transport vehicle (1, 101) according to one or more of the preceding claims.

## Patentansprüche

1. Transportfahrzeug (1, 101), umfassend einen Laderaum (3, 103), der eine Vorderseite, eine Rückseite, die mit einer Be- und Entladeöffnung versehen ist, und eine Ladeplattform (11, 11a, 11b) zum Stützen der Ladung aufweist, sowie umfassend Ladeplattformteile (11, 11a, 11b), die sich mindestens über einen Teil der Breite erstrecken und die mindestens in der Längsrichtung voneinander getrennt sind, sowie einen Förderer (5, 105) zum Bewegen der Ladeplattformteile in horizontaler und vertikaler Richtung senkrecht zu der Längsachse des Fahrzeugs innerhalb des Laderaums, wobei das Transportfahrzeug zum Halten der Ladeplattformteile mindestens im Wesentlichen in einer horizontalen Position in dem Laderaum ausgelegt ist, während die Ladeplattformteile innerhalb des Laderaums bewegt werden, **dadurch gekennzeichnet, dass** der Förderer zwei endlose Kettenförderer (5, 105) umfasst, die von einem angetriebenen Kettenrad (6a, 106) angetrieben werden und deren Weg weiterhin durch nicht angetriebene Kettenräder (6b, 106) bestimmt wird.

2. Transportfahrzeug nach Anspruch 1, **dadurch gekennzeichnet, dass** die Ladeplattformteile an dem Förderer hängen.

3. Transportfahrzeug nach Anspruch 1, **dadurch gekennzeichnet, dass** die Ladeplattformteile von dem Förderer gestützt werden.

4. Transportfahrzeug nach Anspruch 1, 2 oder 3, **dadurch gekennzeichnet, dass** Führungsmittel für das Führen der Ladeplattformteile auf einem Bewegungspfad vorgesehen sind, der durch eine Führung festgelegt wird.

5. Transportfahrzeug nach Anspruch 4, **dadurch gekennzeichnet, dass** die Führungsmittel eine Endlosführung umfassen.

6. Transportfahrzeug nach Anspruch 4 oder 5, **dadurch gekennzeichnet, dass** die Führungsmittel zwei horizontale Führungspfade umfassen, von denen sich ein erster Führungspfad etwa bis zur Hälfte der Höhe des Laderaums erstreckt.

7. Transportfahrzeug nach Anspruch 6, **dadurch gekennzeichnet, dass** sich der zweite horizontale Führungspfad einer Schiene, entlang der sich die Führungsmittel bewegen, oberhalb des ersten horizontalen Führungspfads erstreckt.

8. Transportfahrzeug nach einem oder mehreren der Ansprüche 4 bis 7, **dadurch gekennzeichnet, dass** der Förderer einen Bestandteil der Führungsmittel bildet.

9. Transportfahrzeug nach einem oder mehreren der vorhergehenden Ansprüche, **dadurch gekennzeichnet, dass** sich die Ladeplattformteile im Wesentlichen über die gesamte Breite des Laderaums erstrecken.

10. Transportfahrzeug nach einem oder mehreren der vorhergehenden Ansprüche, **dadurch gekennzeichnet, dass** sich die Ladeplattformteile über eine Entfernung von mehr als 50 cm in der Längsrichtung des Ladebereichs erstrecken.

11. Transportfahrzeug nach einem oder mehreren der vorhergehenden Ansprüche, **dadurch gekennzeichnet, dass** die Ladeplattformteile eine aufrechte Wand auf der Seite, die zur Vorderseite des Laderaums hin gerichtet ist, umfassen.

12. Transportfahrzeug nach einem oder mehreren der vorhergehenden Ansprüche, **dadurch gekennzeichnet, dass** Ladeplattformteile, die jeweils hintereinander angeordnet sind, in der Längsrichtung in einigem Abstand voneinander verteilt sind.

13. Transportfahrzeug nach einem oder mehreren der vorhergehenden Ansprüche, **dadurch gekennzeichnet, dass** Verriegelungsmittel zum Verriegeln der Ladeplattformteile in ihrer Position vorgesehen sind.

14. Transportfahrzeug nach einem oder mehreren der vorhergehenden Ansprüche, **dadurch gekennzeichnet, dass** das Transportfahrzeug so ausgelegt ist, dass es das Platzieren der Ladeplattformteile in dem Laderaum oder, im Gegensatz dazu, ihr Entfernen aus dem Laderaum mit einem relativ geringen Kraftaufwand ermöglicht.

15. Ladebereich (3, 103), eingerichtet zur Verwendung in einem Transportfahrzeug (1, 101) nach einem oder mehreren der vorhergehenden Ansprüche.

## Revendications

1. Véhicule de transport (1, 101) comprenant une zone de cargaison (3, 103) ayant un côté avant, un côté arrière doté d'une ouverture de chargement et de déchargement, une plate-forme de chargement (11, 11a, 11b) pour supporter une cargaison et comprenant des parties de plate-forme de chargement (11, 11a, 11b) s'étendant sur au moins une partie de la largeur, qui sont séparées les unes des autres au moins dans la direction longitudinale, et un transporteur (5, 105) pour déplacer les parties de plate-forme de chargement dans les directions horizontale et verticale, perpendiculairement à l'axe longitudinal du véhicule, à l'intérieur de la zone de cargaison, le véhicule de transport étant conçu pour maintenir les parties de plate-forme de chargement au moins essentiellement dans une position horizontale dans la zone de cargaison pendant que les parties de plate-forme de chargement sont déplacées à l'intérieur de la zone de cargaison, **caractérisé en ce que** le transporteur comprend deux transporteurs à chaîne sans fin (5, 105) qui sont chacun entraînés par une roue dentée menée (6a, 106) et dont le trajet est en outre déterminé par des roues dentées non menées (6b, 106).

2. Véhicule de transport selon la revendication 1, **caractérisé en ce que** les parties de plate-forme de chargement sont suspendues au transporteur.

3. Véhicule de transport selon la revendication 1, **caractérisé en ce que** les parties de plate-forme de chargement sont supportées par le transporteur.

4. Véhicule de transport selon la revendication 1, 2 ou 3, **caractérisé en ce que** des moyens de guidage sont prévus pour guider les parties de plate-forme de chargement dans un trajet de déplacement défini par un guide.

5. Véhicule de transport selon la revendication 4, **caractérisé en ce que** les moyens de guidage comprennent un guide sans fin.

6. Véhicule de transport selon la revendication 4 ou 5, **caractérisé en ce que** les moyens de guidage comprennent deux trajets de guidage horizontaux dont un premier trajet s'étend approximativement à mi-chemin de la hauteur de la zone de cargaison.

7. Véhicule de transport selon la revendication 6, **caractérisé en ce que** le deuxième trajet de guidage horizontal d'une piste le long de laquelle se déplacent les moyens de guidage s'étend au-dessus du premier trajet de guidage horizontal.

8. Véhicule de transport selon une ou plusieurs des revendications 4 à 7, **caractérisé en ce que** le transporteur fait partie des moyens de guidage.

9. Véhicule de transport selon une ou plusieurs des revendications précédentes, **caractérisé en ce que** les parties de plate-forme de chargement s'étendent sur essentiellement toute la largeur de la zone de cargaison.

10. Véhicule de transport selon une ou plusieurs des revendications précédentes, **caractérisé en ce que** les parties de plate-forme de chargement s'étendent sur une distance supérieure à 50 cm dans la direction longitudinale de la zone de cargaison.

11. Véhicule de transport selon une ou plusieurs des revendications précédentes, **caractérisé en ce que** les parties de plate-forme de chargement comprennent une paroi verticale sur le côté qui est dirigé vers l'avant de la zone de cargaison.

12. Véhicule de transport selon une ou plusieurs des revendications précédentes, **caractérisé en ce que** les parties de plate-forme de chargement disposées l'une derrière l'autre sont espacées d'une certaine distance dans la direction longitudinale.

13. Véhicule de transport selon une ou plusieurs des revendications précédentes, **caractérisé en ce que** des moyens de verrouillage sont prévus pour verrouiller les parties de plate-forme de chargement en position.

14. Véhicule de transport selon une ou plusieurs des revendications précédentes, **caractérisé en ce que** le véhicule de transport est conçu pour permettre de placer les parties de plate-forme de chargement dans la zone de cargaison ou, bien au contraire, de les retirer de la zone de cargaison, avec relativement peu d'effort.

15. Zone de chargement (3, 103) agencée pour être utilisée dans un véhicule de transport (1, 101) selon une ou plusieurs des revendications précédentes.
